# EUROPÄISCHE PATENTSCHRIFT

(11) **EP 0 443 505 B1**
(45) Veröffentlichungstag und Bekanntmachung des Hinweises auf die Patenterteilung: **31.08.1994**
(21) Anmeldenummer: 91102314.1
(22) Anmeldetag: 19.02.1991
(51) Int. Cl.: B23D 59/02, B23Q 11/10

(54) **Schneidvorrichtung mit Kühlwasserzufuhr zu einem Sägeblatt**
Cutting device with codant feed to a saw blade
Dispositif de coupe ayant un système d'alimentation d'un agent de refroidissement pour une lame de scie

(30) Priorität: 21.02.1990 DE 9002050 U
(43) Veröffentlichungstag der Anmeldung: 28.08.1991
(73) Patentinhaber: CEDIMA DIAMANTWERKZEUG- UND MASCHINENHANDELSGESELLSCHAFT mbH, D-29227 Celle (DE)
(72) Erfinder: Busch, Dieter, W-3162 Eltze (DE)
(74) Vertreter: König, Norbert, Dipl.-Phys. Dr.

(56) Entgegenhaltungen:
- EP-A- 0 126 793
- EP-A- 0 319 662
- DE-A- 3 347 251
- US-A- 2 167 282
- US-A- 2 343 556
- US-A- 2 413 016
- US-A- 3 608 648

## Beschreibung

Die Erfindung betrifft eine Schneidvorrichtung mit Kühlwasserzufuhr zu einem Sägeblatt gemäß Oberbegriff des Anspruchs 1.

Die Sägeblätter solcher Schneidvorrichtungen werden im Betrieb sehr heiß und müssen daher gekühlt werden, was in der Regel mit Kühlwasser geschieht. Es gibt inzwischen eine Reihe von Vorschlägen zur Zufuhr von Kühlwasser zum Sägeblatt. So wird beispielsweise bei einer bekannten Schneidvorrichtung das Kühlwasser axial über die Schneidwelle dem Sägeblatt zugeführt, vgl. DE-OS 33 47 251. Probleme entstehen dabei hinsichtlich der Zufuhr des Kühlwassers in die axiale Kühlwasserbohrung der Schneidwelle, da aufwendige Dichtungsmaßnahmen vorzusehen sind.

Die Aufgabe der vorliegenden Erfindung besteht darin, eine geeignete, einfach zu realisierende Vorrichtung zum Zuführen von Kühlwasser zur axialen Kühlwasserbohrung einer Schneidwelle von Schneidvorrichtungen der eingangs genannten Art anzugeben, die keine aufwendigen Dichtungsmaßnahmen erfordern.

Diese Aufgabe wird durch die Ausbildung gemäß Kennzeichen des Anspruchs 1 gelöst.

Vorteilhafte und zweckmäßige Weiterbildungen der erfindungsgemäßen Aufgabenlösung sind in den Unteransprüchen gekennzeichnet.

Durch die erfindungsgemäße Aufgabenlösung wird eine Vorrichtung zur Kühlwasserzufuhr angegeben, die einfach herstellbar ist, keine gesonderten Dichtungen mehr erfordert und keine Reibungsprobleme aufwirft. Der zwischen dem rohrförmigen, in die axiale Bohrung der Schneidwelle eingreifenden Bauteil und der Bohrungswandung vorgesehene Ringspalt ist dicht, d. h. über diesen Ringspalt kann kein Wasser bei Betrieb der Schneidvorrichtung austreten, weil infolge der durch das umlaufende Sägeblatt erzeugten Zentrifugalkraft im Sägeblattbereich ein Ansaugeffekt entsteht, wodurch wiederum vor dem Ringspalt ein Druckgefälle aufgebaut wird, das ein Austreten von Wasser über den Ringspalt hinweg verhindert.

Zumindest das rohrförmige Bauteil bzw. der rohrförmige Vorsprung bestehen aus einem Material mit guten Gleiteigenschaften oder sind mit einem Material mit guten Gleiteigenschaften beschichtet, so daß auch bei einem gelegentlichen Kontakt mit der Wandung der axialen Bohrung bzw. Erweiterung der Schneidwelle nur vernachlässigbare Reibkräfte auftreten.

Die Erfindung soll nachfolgend anhand der beigefügten Zeichnung näher erläutert werden.

Es zeigt:
- Fig. 1: einen Schnitt durch eine Schneidwelle mit Spannflanschen und Sägeblatt und mit einer erfindungsgemäßen Vorrichtung zur Kühlwasserzufuhr zur axialen Kühlwasserbohrung der Schneidwelle,
- Fig. 2: eine vergrößerte Darstellung eines die erfindungsgemäße Vorrichtung zur Kühlwasserzufuhr deutlich zeigenden Teiles des Schnittes nach Fig. 1,
- Fig. 3: einen Schnitt durch eine Ausführungsform mit beidseitiger Sägeblattaufnahme, und
- Fig. 4: einen Schnitt A-B durch die Vorrichtung nach Fig. 3.

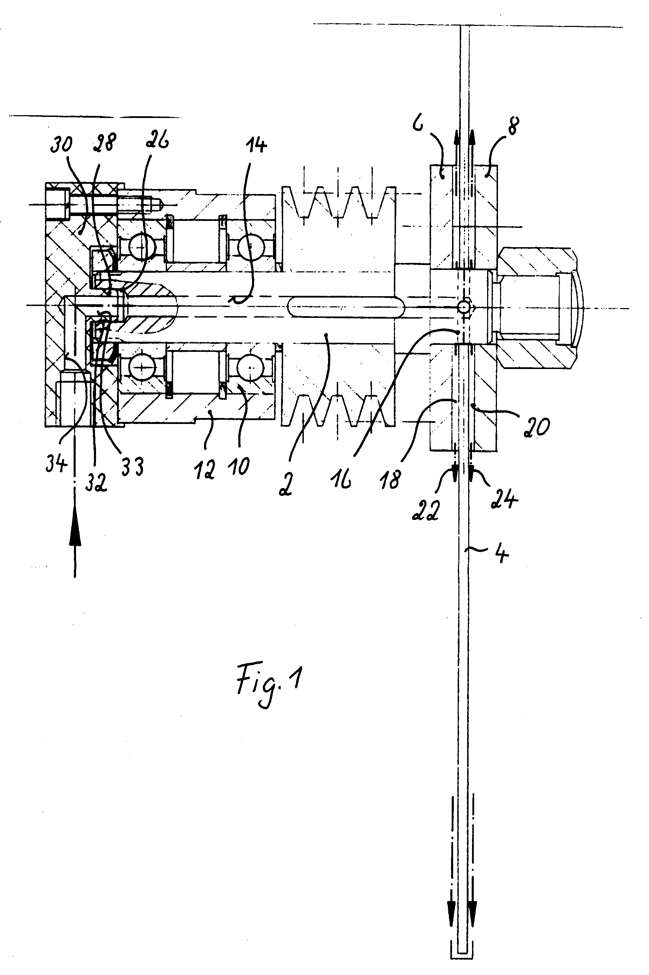

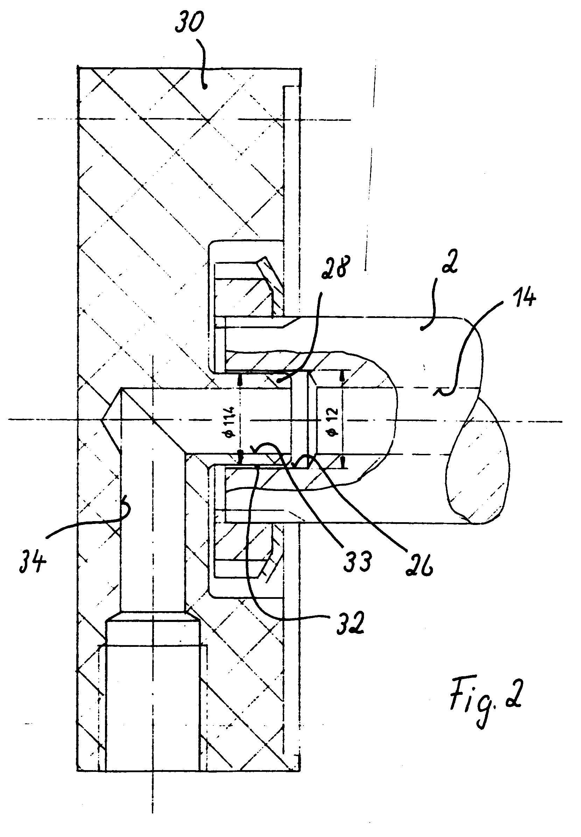

Die Zeichnung zeigt in den Fig. 1 und 2 eine Schneidwelle 2 einer Schneidvorrichtung mit einem Sägeblatt 4, das mit Hilfe von Spannflanschen 6, 8 auf der Schneidwelle befestigt ist. Die Schneidwelle ist in Lagern 10 gelagert, die sich in einem Lagergehäuse 12 befinden.

Das Sägeblatt 4 wird mit Hilfe von Kühlwasser gekühlt, das über eine axiale Schneidwellenbohrung 14 Zugeführt wird, die über radiale Bohrungen 16 mit radialen, in den Spannflanschen 6, 8 ausgebildeten, zum Sägeblatt hin offenen Nuten 18, 20 verbunden ist. Über diese Nuten gelangt das Kühlwasser auf beide Seiten des Sägeblattes und wird durch die erzeugte Zentrifugalkraft des umlaufenden Sägeblattes radial nach außen über die Fläche des Sägeblattes geleitet, wie dies durch die Pfeile 22 und 24 angedeutet ist.

Am Eintrittsende der Bohrung 14 ist eine Bohrungserweiterung 26 vorgesehen, in die ein rohrförmiges Bauteil oder ein rohrförmiger Vorsprung 28 eines feststehenden Kühlwasserzufuhrkörpers 30 hineinragt. Der Außendurchmesser dieses Bauteiles bzw. dieses Vorsprunges 28 ist geringfügig geringer als der Innendurchmesser der Bohrungserweiterung 26, derart, daß zwischen dem Bauteil 28 und der Bohrungserweiterung 26 ein Ringspalt 32 gebildet wird. Der Ringspalt kann beispielsweise eine Breite von 3/10 mm aufweisen.

Der Kühlwasserzufuhrkörper 30 ist mit Hilfe von Schrauben mit dem ebenfalls feststehenden Lagergehäuse 12 verschraubt.

Das rohrförmige Bauteil bzw. der rohrförmige Vorsprung 28 ist mit einer axialen Bohrung 33 versehen, die mit der axialen Bohrung der Schneidwelle ausgerichtet ist und die mit einer Bohrung 34 des Kühlwasserzufuhrkörpers 30 in Verbindung steht, an die eine Kühlwasserzufuhrleitung (nicht dargestellt) anschließbar ist.

Die Differenz zwischen dem Radius der Bohrungsverbreiterung 26 und dem Radius der axialen Bohrung 33, 28 entspricht etwa der Wandstärke dieses Bauteiles bzw. des Vorsprunges 28. Der lichte Durchmesser der Bohrung 33 entspricht dem lichten Durchmesser der Bohrung 14.

Das freie Ende des rohrförmigen Bauteiles bzw. des rohrförmigen Vorsprunges 28 kann mit Abstand zum Grund der rohrförmigen Verbreiterung 26 angeordnet sein. Der Kühlwasserzufuhrkörper 30 einschließlich rohrförmigem Vorsprung 28 besteht vorzugsweise aus einem Kunststoff mit guten Gleiteigenschaften. Es ist aber auch ausreichend, daß lediglich der rohrförmige Vorsprung 28 aus einem Material mit guten Gleiteigenschaften besteht oder mit einem Material mit guten Gleiteigenschaften beschichtet ist.

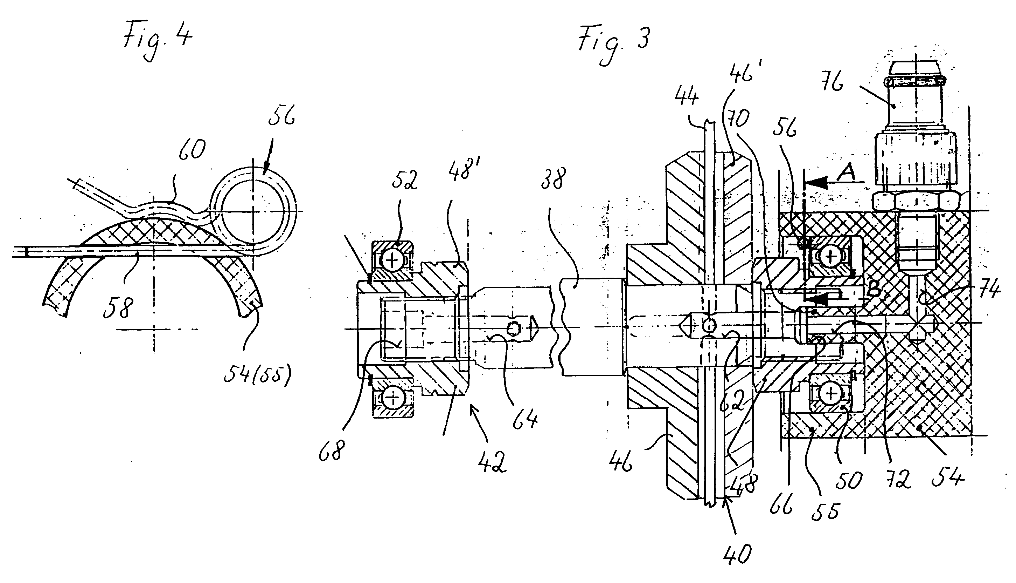

Die Fig. 3 zeigt eine Schneidwelle 38, die beidseitig jeweils eine Aufnahme 40, 42 für ein Sägeblatt 44 aufweist. Die Aufnahmen 40 und 42 bestehen jeweils aus beidseitig des Sägeblattes angeordneten Spannflanschen 46, 46' und Spannmuttern 48, 48', wobei in der Zeichnung nur die Spannflansche der in der Zeichnung rechten Spannmutter dargestellt sind.

Auf den Spannmuttern sind Lager 50, 52 befestigt. Auf dieses Lager ist ein Kühlwasserzufuhrkörper 54 mit einem Ringflansch 55 aufsteckbar, der mit Hilfe eines Federsteckers 56 auf dem Lager gehalten wird. Das übliche Schneidwellenlager und die übliche für den Antrieb vorgesehene Keilriemenscheibe befinden sich zwischen der linken und der rechten Aufnahme 40, 42 und sind nicht dargestellt.

Die Fig. 4 zeigt die Ausbildung des Federsteckers 56 genauer. Der Federstecker 56 wird zur Arretierung des Kühlwasserzufuhrkörpers 54 mit einem Arm 58 durch eine Bohrung im Ringflansch 55 hindurchgesteckt und mit einem Klemmarm 60, der sich außen auf dem Ringflansch 55 auflegt, auf diesem Ringflansch festgeklemmt.

Die Zufuhr von Kühlwasser zu dem Sägeblatt 44 erfolgt von außen zentrisch über beidseitige Schneidwellen-Sackbohrungen 62 und 64, die wie bei der Ausführungsform nach den Fig. 1 und 2 am Eintrittsende jeweils eine Bohrungserweiterung 66, 68 aufweisen. In diese Bohrungserweiterung wird ein rohrförmiges Bauteil, hier ein rohrförmiger Vorsprung 70, des Kühlwasserzufuhrkörpers 54 eingeführt, wenn der Kühlwasserzufuhrkörper 54 auf das Lager 50 oder 52 der Spannmutter 48 oder 48' aufgesteckt wird.

Zwischen dem Vorsprung 70 und der Bohrungserweiterung 66 bzw. 68 ist ein Ringspalt belassen wie bei der Ausführungsform nach den Fig. 1 und 2. Der rohrförmige Vorsprung 70 weist eine axiale Bohrung 72 auf, die mit der Sackbohrung 62 bzw. 64 im montierten Zustand des Kühlwasserzufuhrkörpers 54 ausgerichtet ist und über eine Bohrung 74 des Kühlwasserzufuhrkörpers 54 mit einem Kühlwasseranschluß 76 in Verbindung steht.

Die weitere Ausbildung des Kühlwasserzufuhrkörpers 54 mit Vorsprung 70 und der Sackbohrungen 62, 64 und der Spannmuttern und Spannflansche entspricht der Ausbildung der Ausführungsform nach den Fig. 1 und 2.

Zum Wechseln des Sägeblattes 44 von der Aufnahme 40 auf die Aufnahme 42 und umgekehrt wird der Federstecker 56 gezogen und der Kühlwasserzufuhrkörper 54 vom Lager 50 bzw. 52 der einen Spannmutter 48 oder 48' abgezogen, auf das Lager der anderen Spannmutter aufgesetzt und mit Hilfe des Federsteckers 56 gesichert, der das Lager im eingesteckten Zustand hintergreift.

Eine Dichtung im Bereich des Ringspaltes zwischen rohrförmigem Vorsprung und Bohrungserweiterung ist nicht notwendig, da infolge der im Bereich des Sägeblattes durch das umlaufende Sägeblatt erzeugten Zentrifugalkraft im Bereich des Ringspaltes ein Druckgefälle entsteht, durch das das Wasser zum Sägeblatt hin angesaugt wird und sicher ein Austreten von Wasser über den Ringspalt hinweg verhindert wird.

Das Kühlwasserzufuhrsystem nach Fig. 3 hat den wesentlichen Vorteil, daß es für jede Schneidwellenausführung anwendbar ist, dichtungslos arbeitet und nur eine Zuführung für Kühlwasser bei Rechts- sowie Linksschnitt benötigt.

## Patentansprüche

1. Schneidvorrichtung mit einem Sägeblatt (4, 44), das mit Hilfe von Spannflanschen (6, 8, 46, 46^{'}) und Spannmuttern auf einer Schneidwelle (2, 38) angebracht ist, die eine axiale, mit einer eine Kühlwasserzulaufleitung aufweisenden Vorrichtung zur Kühlwasserzufuhr verbundene Bohrung zur Zufuhr von Kühlwasser an das Sägeblatt aufweist, wobei in der Schneidwelle ausgebildete radiale Bohrungen die axiale Bohrung mit radialen, zum Sägeblatt hin offenen Nuten (18, 20) der Spannflansche verbinden, **dadurch gekennzeichnet**, daß in die axiale Bohrung (14, 26, 62, 64, 66, 68) der Schneidwelle (2, 38) ein feststehendes, rohrförmiges Bauteil (28, 70) mit axialer Bohrung (33, 72) eingreift, dessen Außendurchmesser kleiner als der Innendurchmesser der axialen Bohrung der Schneidwelle ist zur Bildung eines Ringspaltes (32) zwischen der Schneidwellenbohrung und dem rohrförmigen Bauteil und an das die Kühlwasserzulaufleitung angeschlossen ist.

2. Schneidvorrichtung nach Anspruch 1, **dadurch gekennzeichnet**, daß das rohrförmige Bauteil (28, 70) durch einen an einem feststehenden Kühlwasserzufuhrkörper (30, 54) ausgebildeten rohrförmigen Vorsprung gebildet wird, dessen axiale Bohrung (33, 72) mit einer im Kühlwasserzufuhrkörper (30) ausgebildeten Bohrung (34, 74) in Verbindung steht, an das die Kühlwasserzulaufleitung angeschlossen ist.

3. Schneidvorrichtung nach Anspruch 1 oder 2, **dadurch gekennzeichnet**, daß der Kühlwasserzufuhrkörper (30) und das Bauteil bzw. der Vorsprung (28, 70) oder das Bauteil bzw. der Vorsprung (28, 70) aus einem Material mit guten Gleiteigenschaften besteht oder mit einem Material mit guten Gleiteigenschaften beschichtet ist.

4. Schneidvorrichtung nach Anspruch 3, **dadurch gekennzeichnet**, daß das Material ein Kunststoff ist.

5. Schneidvorrichtung nach Anspruch 1, **dadurch gekennzeichnet**, daß der Ringspalt (32) eine Breite von etwa 3/10 mm aufweist.

6. Schneidvorrichtung nach einem der vorhergehenden Ansprüche, **dadurch gekennzeichnet**, daß das feststehende rohrförmige Bauteil bzw. der rohrförmige Vorsprung (28, 70) in einer am Kühlwasserzulaufende der Schneidwelle (2) ausgebildeten Bohrungsverbreiterung (26, 66, 68) der axialen Bohrung (14, 62, 64) der Schneidwelle (2, 38) angeordnet ist.

7. Schneidvorrichtung nach Anspruch 6, **dadurch gekennzeichnet**, daß die Differenz zwischen dem Radius der Bohrungserweiterung (26, 66, 68) und dem Radius der axialen Bohrung (33, 72) des rohrförmigen Bauteiles bzw. des rohrförmigen Vorsprunges (28, 70) etwa der Wandstärke dieses Bauteiles bzw. dieses Vorsprunges (28, 70) entspricht.

8. Schneidvorrichtung nach einem der vorhergehenden Ansprüche, **dadurch gekennzeichnet**, daß das rohrförmige Bauteil bzw. der rohrförmige Vorsprung (28) oder der Kühlwasserzufuhrkörper (30) mit dem Lagergehäuse (12) des Schneidwellenlagers verbunden ist.

9. Schneidvorrichtung nach einem der vorhergehenden Ansprüche, **dadurch gekennzeichnet**, daß das freie Ende des rohrförmigen Bauteiles bzw. des rohrförmigen Vorsprunges (28, 70) mit Abstand zum Grund der Bohrungserweiterung (26, 66, 68) angeordnet ist.

10. Schneidvorrichtung nach einem der vorhergehenden Ansprüche, **dadurch gekennzeichnet**, daß bei einer Schneidwelle (38) mit beidseitiger Aufnahme (40, 42) für das Sägeblatt (44) die axiale Bohrung der Schneidwelle beidseits der Schneidwelle als Sackbohrung (62, 64) ausgebildet ist und auf der Spannmutter (48, 48') ein Lager (50, 52) angeordnet ist, auf dem der umsteckbar ausgebildete Kühlwasserzufuhrkörper (54) lösbar angeordnet ist.

11. Schneidvorrichtung nach Anspruch 10, **dadurch gekennzeichnet**, daß der Kühlwasserzufuhrkörper (54) einen Ringflansch (55) aufweist, mit dem der Kühlwasserzufuhrkörper (54) auf das Lager (50, 52) aufsteckbar ist.

12. Schneidvorrichtung nach Anspruch 11, **dadurch gekennzeichnet**, daß zur Sicherung des aufgesteckten Kühlwasserzufuhrkörpers (54) ein das Lager (50, 52) hintergreifender, lösbarer Federstecker (56) vorgesehen ist.

## Claims

1. A cutter mechanism having a sawblade (4, 44) fitted by means
of clamping-flanges (6, 8, 46, 46') and clamping-nuts to a cutter shaft which for feeding cooling water to the sawblade exhibits an axial bore which for the cooling water feed is connected to a device which exhibits a cooling water inlet pipe, whilst radial bores formed in the cutter shaft connect the axial bore to radial grooves (18, 20) in the clamping-flange, which are open towards the sawblade, **characterized** in that, engaging in the axial bore (14, 26, 62, 64, 66, 68) in the cutter shaft (2, 38), there is a stationary tubular component (28, 70) having an axial bore (33, 72) and an outer diameter less than the inner diameter of the axial bore in the cutter shaft for the formation of an annular gap (32) between the bore in the cutter shaft and the tubular component, the cooling water inlet pipe being connected to the latter.

2. A cutter mechanism as in Claim 1, **characterized**
in that the tubular component (28, 70) to which the cooling water inlet pipe is connected is formed by a tubular projection which is formed on a stationary cooling water feeder body (30, 54) and the axial bore (33, 72) in which is connected to a bore (34, 74) formed in the cooling water feeder body (30).

3. A cutter mechanism as in Claim 1 or 2, **characterized**
in that the cooling water feeder body (30) and the component or projection (28, 70) respectively or the component or projection (28, 70) respectively consist of a material having good sliding properties or are coated with a material having good sliding properties.

4. A cutter mechanism as in Claim 3, **characterized**
in that the material is a plastics.

5. A cutter mechanism as in Claim 1, **characterized**
in that the annular gap (32) exhibits a width of about 3/10 mm.

6. A cutter mechanism as in one of the preceding Claims, **characterized**
in that the stationary tubular component or tubular projection (28, 70) respectively is arranged in a widening (26, 66, 68) of the bore of the axial bore (14, 62, 64) in the cutter shaft (2, 38), formed at the end of the cutter shaft (2) where there is the cooling water inlet.

7. A cutter mechanism as in Claim 6, **characterized**
in that the difference between the radius of the widening (26, 66, 68) of the bore and the radius of the axial bore (33, 72) of the tubular component or tubular projection (28, 70) respectively corresponds nearly with the thickness of wall of this component or this projection (28, 70).

8. A cutter mechanism as in one of the preceding Claims, **characterized**
in that the tubular component or tubular projection (28) respectively or the cooling water feeder body (30) is connected to the bearing housing (12) of the cutter shaft bearing.

9. A cutter mechanism as in one of the preceding Claims, **characterized**
in that the free end of the tubular component or tubular projection (28, 70) respectively is arranged at a distance from the root of the widening (26, 66, 68) of the bore.

10. A cutter mechanism as in one of the preceding Claims, **characterized**
in that in the case of a cutter shaft (38) having a receiver (40, 42) at each end for the sawblade (44) the axial bore in the cutter shaft is made as a blind bore (62, 64) at both ends of the cutter shaft and upon the clamping-nut (48, 48') a bearing (50, 52) is arranged, upon which the cooling water feeder body which is made interchangeable, is arranged detachably.

11. A cutter mechanism as in Claim 10, **characterized**
in that the cooling water feeder body (54) exhibits an annular flange (55) by which the cooling water feeder body (54) may be mounted on the bearing (50, 52).

12. A cutter mechanism as in Claim 11, **characterized**
in that for securing the mounted cooling water feeder body (54) a detachable spring connector (56) is provided, which engages behind the bearing (50, 52).

## Revendications

1. Dispositif de coupe avec une lame de scie (4, 44) qui est montée, à l'aide de flasques de serrage (6, 8, 46, 46') et d'écrous tendeurs sur un arbre de coupe, qui présente un alésage axial relié pour l'amenée d'eau de refroidissement à la lame de scie, à un dispositif d'amenée d'eau de refroidissement présentant une conduite d'arrivée d'eau de refroidissement, des alésages radiaux formés dans l'arbre de coupe reliant l'alésage axial à des rainures radiales (18, 20) des flasques de serrage ouvertes en direction de la lame de scie,
caractérisé en ce que, dans l'alésage axial (14, 26, 62, 64, 66, 68) de l'arbre de coupe (2, 38), est en prise un élément tubulaire fixe (28, 70) avec un alésage axial (33, 72), dont le diamètre extérieur est inférieur au diamètre intérieur de l'alésage axial de l'arbre de coupe pour former une fente annulaire (32) entre l'alésage de l'arbre de coupe et l'élément tubulaire et à laquelle est raccordée la conduite d'arrivée d'eau de refroidissement.

2. Dispositif de coupe selon la revendication 1,
caractérisé en ce que l'élément tubulaire (28, 70) est formé par une saillie tubulaire formée sur un corps d'amenée d'eau de refroidissement fixe (30, 54) dont l'alésage axial (33, 72) est en liaison avec un alésage (34, 74) formé dans le corps d'amenée d'eau de refroidissement (30), auquel est raccordée la conduite d'arrivée d'eau de refroidissement.

3. Dispositif de coupe selon la revendication 1 ou 2,
caractérisé en ce que le corps d'amenée d'eau de refroidissement (30) et l'élément ou respectivement la saillie (28, 70) ou l'élément ou respectivement la saillie (28, 70) sont constitués d'un matériau ayant de bonnes propriétés de glissement ou sont recouverts d'un matériau ayant de bonnes propriétés de glissement.

4. Dispositif de coupe selon la revendication 3,
caractérisé en ce que le matériau est une matière synthétique.

5. Dispositif de coupe selon la revendication 1,
caractérisé en ce que la fente annulaire (32) présente une largeur d'environ 3/10 mm.

6. Dispositif de coupe selon l'une des revendications précédentes,
caractérisé en ce que l'élément tubulaire fixe ou respectivement la saillie tubulaire (28, 70) est disposé dans un élargissement d'alésage (26, 66, 68) de l'alésage axial (14, 62, 64) de l'arbre de coupe (2, 38), formé à l'extrémité d'arrivée d'eau de refroidissement de l'arbre de coupe (2).

7. Dispositif de coupe selon la revendication 6,
caractérisé en ce que la différence entre le rayon de l'élargissement d'alésage (26, 66, 68) et le rayon de l'alésage axial (33, 72) de l'élément tubulaire ou respectivement de la saillie tubulaire (28, 70), correspond sensiblement à l'épaisseur de paroi de cet élément ou respectivement de cette saillie (28, 70).

8. Dispositif de coupe selon l'une des revendications précédentes,
caractérisé en ce que l'élément tubulaire ou respectivement la saillie tubulaire (28) ou le corps d'amenée d'eau de refroidissement (30) est relié au logement de palier (12) du palier de l'arbre de coupe.

9. Dispositif de coupe selon l'une des revendications précédentes,
caractérisé en ce que l'extrémité libre de l'élément tubulaire ou respectivement de la saillie tubulaire (28, 70) est disposée écartée du fond de l'élargissement d'alésage (26, 66, 68).

10. Dispositif de coupe selon l'une des revendications précédentes,
caractérisé en ce que, dans le cas d'un arbre de coupe (38) avec logement bilatéral (40, 42) pour la lame de scie (44), l'alésage axial de l'arbre de coupe est formé des deux côtés de l'arbre de coupe sous forme d'alésage borgne (62, 64) et un palier (50, 52) est disposé sur l'écrou tendeur (48, 48'), sur lequel le corps d'amenée d'eau de refroidissement (54) réalisé inchangeable est monté amovible.

11. Dispositif de coupe selon la revendication 10, caractérisé en ce que le corps d'amenée d'eau de
refroidissement (54) présente un flasque annulaire (55) par lequel le corps d'amenée d'eau de refroidissement (54) peut être fixé sur le palier (50, 52).

12. Dispositif de coupe selon la revendication 11,
caractérisé en ce que, pour le maintien du corps d'amenée d'eau de refroidissement (54) fixé, on prévoit une fiche à ressort (56) amovible, en prise derrière le palier (50, 52).
